# EUROPEAN PATENT SPECIFICATION

(11) **EP 2 989 002 B1**
(45) Date of publication and mention of the grant of the patent: **06.03.2019**
(21) Application number: 13882829.8
(22) Date of filing: 25.04.2013
(51) Int. Cl.: B29D 99/00

(54) **A METHOD AND A PRODUCTION LINE FOR THE MANUFACTURE OF A TORSION-BOX TYPE SKIN COMPOSITE STRUCTURE**
VERFAHREN UND PRODUKTIONSLINIE ZUR HERSTELLUNG EINER TORSIONSKASTENARTIGEN HAUTVERBUNDSTRUKTUR
PROCÉDÉ ET CHAÎNE DE PRODUCTION POUR LA FABRICATION D'UNE STRUCTURE COMPOSITE DE PEAU DE TYPE CAISSON DE TORSION

(43) Date of publication of application: 02.03.2016
(73) Proprietor: SAAB AB, 581 88 Linköping (SE)
(72) Inventor: GUSTAVSSON, Stefan, S-585 91 Linköping (SE)
(74) Representative: Zacco Sweden AB
(86) International application number: PCT/SE2013/050457
(87) International publication number: WO 2014/175795

(56) References cited:
- WO-A1-03/103933
- DE-A1-102008 013 759
- US-A1- 2004 051 214
- US-A1- 2005 178 083
- US-A1- 2007 175 171
- US-A1- 2009 320 292
- US-A1- 2009 320 398
- US-A1- 2011 139 932
- US-B1- 6 743 504
- N.N.: "FM 300-2 FILM ADHESIVE", , 27 September 2011 (2011-09-27), XP055326001, Retrieved from the Internet: URL:https://www.cytec.com/sites/default/fi les/datasheets/FM_300-2_092711.pdf [retrieved on 2016-12-05]

## Description

### TECHNICAL FIELD

The present invention regards a method for manufacture of a torsion-box type skin composite structure according to claim 1 and regards a torsion-box type skin composite structure according to claim 8. The invention also regards a production line for the manufacture of a torsion-box type skin composite structure according to claim 13.

The disclosure relates to the aircraft industry and to aircraft service engineering. However, the disclosure is not limited thereto.

### BACKGROUND ART

Current aerodynamic technologies for aircraft wings, vertical/horizontal stabilizers, fins, nacelles etc., use composite or sheet metal skins and make use of different solutions for releasable connecting the aircraft skin to a main sub-structure.

Today composite aircraft structures are often made by hand. The production is personal intensive and personnel often add additional composite material to the structure for securing strength to the composite structure. However, such addition for securing strength implies increased weight of the aircraft. There is a desire to minimize weight of the composite structure at the same time as the structure can be built in a production line with such design that the strength properties are satisfactory achieved and with an aerodynamic smooth outer skin surface. At the same time there is a desire to decrease the amount of personnel and/or eliminate hand-work labour efforts, which otherwise involves high costs in production line. Thus, there is a desire to achieve a cost-effective production of aircraft, which are of low weight, have a smooth outer surface, and exhibit high strength.

The aircraft skin may be coupled or bond to the sub-structure, or part of the sub-structure, by means of rib feet coupled to ribs etc. In some cases bolts are used, which extend through bore holes of the wing skin and further to brackets, which are secured to the sub-structure for holding the skin to the sub-structure. Such bolt arrangement through the wing skin means that bolt heads disturbe the laminar flow over the aircraft skin, whereby drag is produced increasing the aircraft fuel consumption.

There are large shear and peel loads on said rib feet. In some rare cases micro cracks may appear in said rib feet caused by heavy loads on the skin structure. Such damages are critical in view of flight safety and may also involve complex repair process.

US 1212/0094077 discloses a aircraft component having a skin stiffened with stringers. The skin and stringers are co-cured together and thereby joined to each other. Ribs intersect the stringers and the latter passing so called "mouseholes" of the ribs. Local flarings of the stringers are used to join the skin to the ribs.

DE 102008013759 A1 regards a method for producing an integral composite fiber component, in particular an aerodynamic active surface, comprising a plurality of stiffening elements enclosed within an outer skin. The integral composite fiber component is achieved by producing a plurality of removable cores substantially corresponding with an inner surface geometry of the fiber composite component and covering the cores with a web-shaped semifinished product for creating the outer skin and subsequently the cores are removed.

For rigid co-bonding the skin to the ribs, rivets or bolts may be used according to prior art techniques. The outer surface (aerodynamic surface) of the skin (wing skin, fuselage skin, stabilizer skin, fin skin, nacelle skin etc.) of prior art will thus exhibit rivet or bolt heads being exposed to the airflow. The heads will disurb the natural flow of air flowing over the outer surface when the component is used.

There is thus a need to provide a coupling between an aircraft skin to a sub-structure, i.e. provide a torsion-box type skin composite structure, which technical solution still involves strength, and promotes laminar flow over aircraft skin.

There is a desire to decrease the amount or eliminate personal intensive work efforts, which otherwise involves high costs in production line, still achieving a structure which is of high strength and is of low weight. Prior art production lines comprises today superfluous personal hand work, which implies human ambitions to add more composite material to the structure at the same time as this involves high costs in production.

There is also a need to shorten the time required for manufacture of the torsion-box type skin composite structure.

An object of the present invention is to provide a semi-automatic production of a torsion-box type aircraft skin structure, which skin structure is ready to mount on a sub-structure or part thereof.

An object is to provide a torsion-box type aircraft structure that is cost-effective to use and produce, and which torsion-box type aircraft structure having a low service cost for inspection of the structure.

An object is to provide an aircraft, which has low fuel consumption, and therefore can be regarded as green technology.

An object of the present invention is to provide a method for producing a torsion-box type skin composite structure and a torsion-box type aircraft structure, whererin the method being cost-effective in production and provideds a high strength structure.

An object is to provide a method for producing a torsion-box type composite skin structure and a computer program for performing such method.

An object is to provide software (data medium storing program) that, when it is executed on a computer together with a production line data system or included in it, enables an automatic or semi-automatic execution of the various stages of the aforementioned method.

### SUMMARY OF THE INVENTION

This has been achieved by the method defined by the features of claim 1.

In such way is achieved a torsion-box type skin composite structure, which can be manufactured in one curing cycle and thereafter just finished and trimmed for mounting to a main sub-structure (such as ribs of a wing or other airfoil). By the method step of positioning and co-curing the stiffener lay-up and the fastener lay-up toghether with the skin-lay up there will be provided a torsion-box type skin composite structure, which is mountable to a main sub-structure (such as ribs of an aircraft wing) via the rib feet. In such way, at the same time, is achieved a smooth outer surface of the torsion-box type skin composite structure, which outer surface serves as an aerodynamic surface when the structure (such as a wing) moves through the air.

By means of the integrated rib feet (i.e. the elements connecting together the skin component and the stiffener element) a rigid joint between the rib feet and the stringer is achieved. The integrated rib feet will thus promote that the main sub-structure is rigidly joined to the skin component at the same time as no bolt heads are exposed on the skin outer surface, and wherein the structure is possible to be made in one curing cycle cost-effective and by means of the achieved uncomplicated method, the production line can be automatized.

By means of connecting the main sub-structure (e.g. ribs) to the integrated rib feet which elements are co-cured with the skin component and the stringer eventual load stresses - acting on each rib foot and on the joint between the latter and the skin component - will be balanced and eqalized due to the inventive integral structure and co-curing of the rib feet with the stringer and the skin component.

Suitably, a flange of the stringer and a skin substrate holding a plurality of said flanges constitute the skin component, wherein all parts comprise composite material. The integral rib feet is suitably defined as an integral attachment of the rib feet to both the stringer and the skin component (skin). The integral attachment to the skin component is preferably made via the flanges of the stringer, which flanges in turn are attached (co-cured) to a skin substrate component. The thickness of said flanges and that of the skin substrate component preferably defines the skin component overall thickness.

Thereby the thickness can be made relatively thin, since also the said flanges are used for building the skin component.

In such way is also an efficient aircraft manufacture achieved in view of cost-effective production of wings, stabilizers, control surfaces etc. An ATL (automatic tape laying) apparatus may be used for providing the skin lay-ups onto the forming tool and onto the box tools.

The box tools are preferably adapted to be used in a so called hot drape forming HDF procedure, wherein a membrane is used to form the lay-up over the box tool. Also the hot drape procedure can be performed semi-automatic or automatic.

Preferably, the torsion box-type skin composite structure comprises a plurality of said rib feet.

As e.g. an aircraft wing exhibits a large amount of rib feet the method is suitable for automatization.

Suitably, the lay-ups used for the rib feet and stringer are formed into L-shaped profile. The box tools are used for forming two mirror L-profiles, which in turn form a U-profile (L profiles abutting each other on a small gap there between to be filled with resin).

Preferably, the U-profile formed by the box tool will contact an adjacent U-profile (with parallel flanges) formed over an adjacent box tool, wherein the flanges of respective adjacent U-profile bonded together will constitute a fastening web of the rib feet (and correspondingly a stiffener web of the stiffening element, to which stiffening web the integrated fastener element is co-cured for rigid joint). The rigid joint between the integrated rib feet and the stringer and the skin component will make the rib feet extremely well suited for attachment to the main sub-structure, as said rigid joint takes up both shear forces and peel forces acting on the joint interface between the skin and rib feet.

Suitably, said stringer are integrated parts of the skin component and being co-cured with the skin component.

The rib feet lay-up is thus co-cured with skin lay-up and stringer lay-up. As the thereby integrated rib feet will have a rigid joint to both the skin component and the stringer, peel and shear stresses acting at the joints will be extremely balanced, especially by means of the integral joint between the integrated rib feet and the stringer.

Suitably, the main sub-structure is adapted to be bolted to the integrated rib feet of the torsion-box type skin composite structure.

Thus, integrated rib feet will act as a chain of integrated fastener elements taking up torque forces between the latter and the skin component by means of the integral joints to the stringers.

Preferably, the step of positioning the stringer and the rib feet lay-up is performed after forming said stringer and rib feet lay-ups over a box tool.

Thereby is achieved that a rib feet and stringer lay-up will be provided, which lay-ups constitute an integrated lay-up.

Preferably the box tool makes part of a box tool module comprising connectable to each other separate box tool units, each of which being used for forming separate/or pair wise/or of four pieces made/rib feet lay-up or lay-ups.

Suitably, the step of positioning the stringer and the rib feet lay-up is performed such that a first portion of the rib feet lay-up joins the stringer lay-up.

In such way peel and shear loads are balanced and absorbed by the joint between rib feet and stringer elements.

Preferably, the forming of a rib feet lay-up is performed over the box tool prior the forming of the stringer lay-up over said box tool and said rib feet lay-up.

Suitably, the forming of the stringer lay-up is performed over a serie of box tools over which are formed rib feet lay-ups.

Preferably, the box tools are configured to fit in module system and being arranged with fixing members for mounting the box tools to each other.

Suitably, the box tools is made of aluminum or other hard tool material.

Preferably, the forming of the rib feet ans stringer lay-ups is performed by a robot apparatus.

Suitably, the positioning of the stringer and rib feet lay-up is made by a robot apparatus.

Preferably, the step of positioning the stringer and rib feet lay-up is performed such that a second portion of the rib feet lay-up joins the skin lay-up.

In such way is achieved that the produced intergral rib feet element also is rigidly joined and bonded to the skin component, which in turn alternatively constists of a skin composite substrate and flanges of stringer elements.

Suitably, the step of positioning the stringer and rib feet lay-up to the skin lay-up is made after the application of an adhesive to a joining area between said lay-ups.

In such way is achieved that a filling between the lay-ups is achieved will which increase the strength of the structure.

Thereby is also achieved that a filling is provided between the stringer lay-up and the skin lay-up. I.e. the adhesive may be applied beween both stringer lay-up flanges and skin lay-up and between rib feet lay-up flanges and stringer lay-up flanges.

Suitably, the adhesive is applied between stringer lay-up and rib feet lay-up and also between stiffener lay-up and skin lay-up.

Preferably, such application is performed by an automatic procedure.

Suitably, the adhesive comprises fiber-like reinforcement elements.

In such way is achieved strength properties being extraordinary high.

Preferably, the step of co-curing the integrated lay-up is made in an autoclave.

In such way is achieved that a torsion-box type skin composite structure can be made in one curing cycle which is cost-effective.

Suitably, the foming tool comprises a male forming tool and a female forming tool.

Preferably, the skin lay-up is applied onto the male tool forming surface. The male tool being thereafter turned up-side down and positioned into the female tool in such way that the skin lay-up will come into proper contact with a female tool forming surface of the female tool.

Suitably, the female tool comprises nano-sized fiber-like elements (such as CNTs) for strenghtening the forming surface (thus being hard and smooth) and thereby promoting an outer surface of the skin component (after co-curing of the integral lay-up) that is smooth.

Preferably, the fiber-like reinforcement elements are oriented i z-direction, i.e. transverse to the plane of the lay-ups in between the plies and within the plies per se.

Suitably, the fiber-like reinforcement elements comprises carbon nano tubes (CNTs).

The lay-up material may be of any suitable resin pre-impregnated fibre material.

Preferably, the material used can be pre-impregnated woven fabric.

Alternatively, the material used can be dry woven fabric, in a second step injected or impregnated with resin.

Suitably, the material used can be dry woven fabric interleaved with resin film. The lay-ups may be based on pre-preg tapes such as unidirectional pre-impregnated fiber plies, wherein the fibers being of woven carbon fiber pre-preg fabrics, Kevlar, spectra pre-preg tapes and fabrics etc.

Preferably, prior the step of co-curing, the intergral lay-up is subject to a bagging procedure for eliminating eventual air pockets within the lay-up.

Suitably, the method comprises the further step of mounting the rib feet to the main sub-structure. Preferably, this further step also includes mounting of fastening members (such as a set of bolts) having extensions parallel with each other and parallel with the plane of the skin component.

The further step may also comprise the application of an adhesive or sealing between the fastener elements and elements of the main sub-structure.

In such way is achieved that the fastener element is rigidly coupled to the main sub-structure.

In such way bolts fasten the main sub-structure to the integrated rib feet. When the bolts are removed, the skin composite structure can be removed from the main sub-structure (ribs).

The apparatus for providing a forming tool can be an automatic machining apparatus CNC adapted to machine the forming tool. The apparatus for providing a skin lay-up onto the forming tool may be an ATL apparatus operated semi-automatic or automatic. The apparatus for positioning a stringer lay-up and a rib feet lay-up to the skin lay-up forming an integrated lay-up can be a robot cooperating with an automatic forming tool for forming rib feet elements one by one and stringer elements one by one and thereafter automatically or semi-automatically arranging the lay-ups on a box tool modular set up. The apparatus for co-curing the integral lay-up may be an autoclave into which the integral lay-up automatically or semi-automatically being inserted. Thereafter the integral structure (laminate) being demoulded, wherein the box tools are removed from co-cured laminate. This can be performed by a robot arm connected to a gripping device.

Preferably, the introduction of a module box forming tool, on which a second lay-up has been pre-formed, is provided into and in proper position relative the female skin forming tool in such way that the second lay-up contacts the skin lay-up.

Suitably, an automatic sealing is achieved around the female skin forming tool and introduced module box forming tool by positioning the skin lay-up and the second lay-up within a vacuum bag for evacuation.

Preferably, after the co-curing process, an automatic demoulding step is performed, where after machining, application of primer and wrapping steps are performed.

The objects herein described is also solved by the torsion-box type skin composite structure defined in the introduction, wherein the torsion-box type skin composite structure being characterized by the features being claimed by claim 8.

This promotes that peel stresses acting at one edge area (seen in longitudinal direction of the fastener element, e.g. rib foot flange, wherein the opposite edge area of the rib foot is subjected to compression) can be balanced by means of the stringer element.

Thereby is provided that eventual load caused by skin component pressure/tension forces relative the main sub-structure (such as ribs of an aircraft wing) will be balanced and absorbed by the rib feet rigidly bonded to and co-cured with the stringers.

Also is achieved that a smooth aerodynamic surface is achieved as no rivets extend through the skin for bonding the rib feet to the structure.

No additional working procedure steps have to be done with regard to bolting additional clamps, brackets etc. for strengthening the rib feet to the skin component.

Suitably, the stringer exhibits a second portion (e.g. a flange), which is firmly integrated with the skin component.

In such way is achieved that the bond between stringer and rib feet is even more secured and which integral design also strengthens the rib foot bond with the skin component (the skin component laminate preferably comprises flanges of the T-profile stringer).

Thereby is achieved an increase in strength and thus at the same time a decrease in stress concentration between skin and rib feet (by the inventive chord wise shear connection).

The rib feet will thus have high strength bond to the skin component due to the integral bond to the stringer, wherein the shear and peel forces acting on the contact area between skin component and the rib feet will be balanced.

Preferably, the rib foot exhibits a third portion, which comprises at least one bore hole.

Suitably, the rib foot is configured as a three-wall laminate co-cured with the stringer and the skin component.

This is also solved by an aircraft wing comprising a torsion-box type skin composite structure according according the above-mentioned inventive solution, wherein the torsion-box skin composite structure is releasable mounted to a main sub-structure via the integral rib feet.

In such way is achieved an aircraft wing, which comprises a smooth outer surface at the same time as the bonding of the wing skin to the ribs of the wing is strengthened. The releasable mounting can be achieved by bolts. The aircraft wing is of low weight, exhibits a smooth aerodynamic surface, can be made efficient in production.

This is also solved by a production line for the manufacture of a torsion-box type skin composite structure mountable to a main sub-structure, the torsion-box type skin composite structure comprises a skin component, a stringer, a rib foot for bonding the torsion-box type skin composite structure to the main sub-structure, wherein the production line comprises an apparatus for providing a forming tool; an apparatus for providing a skin lay-up onto the forming tool; an apparatus for positioning a stringer lay-up and a rib foot lay-up to the skin lay-up for forming an integral lay-up and an apparatus for co-curing the integral lay-up.

In such way is achieved a production line which is suitable for automatization, which production line provides a torsion-box type skin composite structure cost-effectively, in such way that the outer surface of the skin being smooth still achieving a rigid joint of the rib foot to the skin component (the skin component is preferably co-cured of integral outer skin substrate and inner skin layer provided by the stringer flanges). Such production line will permit a high production rate of the manufacture of the torsion-box type skin composite structure. There is no need to separately mount brackets and bolts through the skin component for securing the rib foot to the skin component. Such production line promotes the use of robots and automatization apparatuses for efficiency in production.

This has been solved also by means of a data medium storing program for causing (in a production line according to the inventive solution) an automatic or semi-automatic manufacture of a torsion-box type skin composite structure, wherein said program comprises a program code stored on a medium, which is readable on a computer, for causing a control unit to perform the method steps of: providing a forming tool; providing a skin lay-up onto the forming tool; positioning a stringer lay-up and a rib foot lay-up to the skin lay-up for forming an integral lay-up and co-curing the integral lay-up.

This has also been solved by a data medium storing program product comprising a program code stored on a medium, which is readable on a computer, for performing the method steps according to any of claims 1 to 7, when a data medium storing program according to claim 14 is run on a computer device.

In such way is an effective production of the inventive article achieved, which is cost-effective and time saving.

Thereby is also provided a program product that can be used for a plurality of production lines for production of the inventive structure.

The foregoing and other objects and advantages of the present invention will be apparent and may be combined with features claiming the invention for all embodiments to those skilled in the art, in view of the following detailed description, taken in conjunction with the appended claims and the accompanying drawings. The inventive solutions achieved by the invention can thus be taken into account for all claim categories herein disclosed.

### BRIEF DESCRIPTION OF THE DRAWINGS

The present invention will now be described by way of examples with references to the accompanying schematic drawings, of which:
Fig. 1 illustrates an aircraft comprising an aircraft wing provided with a torsion-box type skin composite structure according to one aspect of the present invention;
Fig. 2 illustrates a torsion-box type skin composite structure according to one aspect of the present invention;
Figs. 3a to 3e illustrate different configurations of rib foot lay-ups according to different aspects of the present invention;
Fig. 4 illustrates a pre-preg lay-up used as a blank formed to a simular profile as shown in Fig. 3c;
Fig. 5a illustrates a forming tool according to one aspect of the present invention;
Figs. 5b-5c illustrate a section of a modular system of box tools according to one aspect of the present invention;
Fig. 5d illustrates the section in Fig. 5c further coupled to additional sections of the modular system of box tools for forming an integral lay-up;
Figs. 6a to 6e illustrate method steps and manufacture tools of a production line according to one aspect of the present invention;
Figs. 7a to 7b illustrate the part of the principle of the present invention, where Fig. 7a shows prior art principle;
Fig. 8 illustrates one aspect of the present invention;
Figs. 9a to 9c illustrate fiber mats cut into shape suitable for the rib feet shown in Fig. 8;
Figs. 10a to 10b illustrate flowcharts disclosing methods according to different aspects of the present invention; and
Fig. 11 illustrates a computer device according to one aspect of the invention.

### DETAILED DESCRIPTION

Hereinafter, embodiments of the present invention will be described with reference to the accompanying drawings, wherein for the sake of clarity and understanding of the invention some details of no importance are deleted from the drawings.

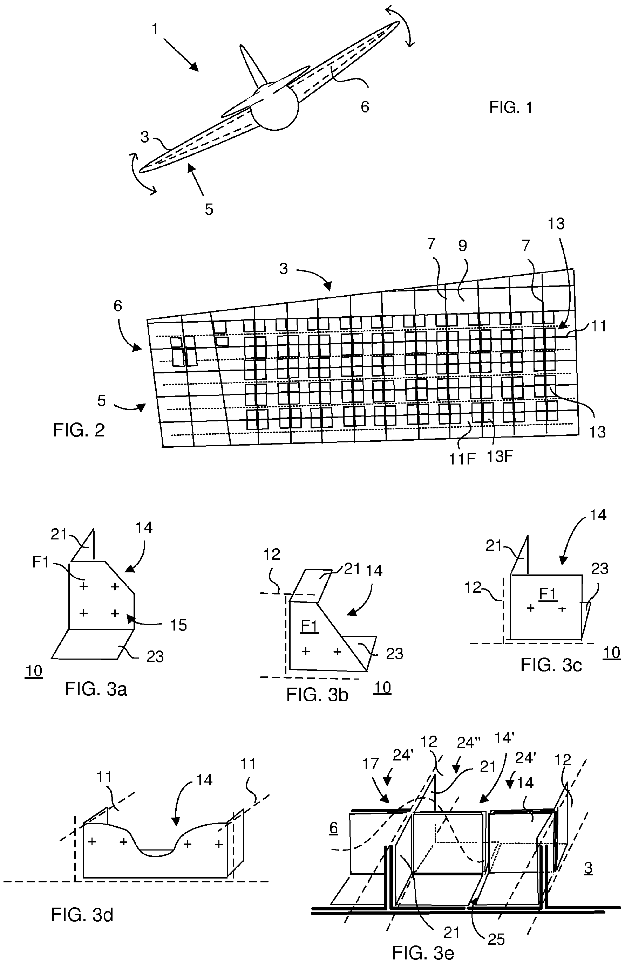

Fig. 1 illustrates an aircraft 1 comprising a torsion-box type skin composite structure 3 according to the invention. In this case the structure 3 is part of an airfoil (aircraft wing 5) of the aircraft 1.

Fig. 2 illustrates a torsion-box type skin composite structure 3 of a wing 5, which is mountable to a main sub-structure 6, such as wing ribs 7. The torsion-box type skin composite structure 3 comprises a skin component 9 which is co-cured with stringers 11 and integral rib feet 13 (here rib feet flanges integrated by co-curing with adjacent stringer web), thereby forming an integral wing skin. The flanges 11F of the stringers 11 and flanges 13F of the rib feet 13 constitute the skin component 9 and can be a part of the total thickness of the wing 5 skin. The stringer elements 11 extend spanwise and the rib feet 13 may extend chordwise or correspondingly with the extension of the wing ribs 7. The wing ribs 7 of the main sub-structure 6 are bolted to the webs of the rib feet 13 for holding the torsion-box type skin composite structure 3 (i.e. a stiffened skin component) to the main sub-structure 6 (see also Fig.1).

Figs. 3a to 3e illustrate different configurations of rib feet lay-ups 14 of an integral lay-up 17 according to different aspects of the present invention. Bore holes 15 are drilled after co-using of the lay-ups. Fig. 3a illustrates one example of a rib foot lay-up 14. With reference to a flange portion comprising bore holes 15 for bolting the structure 3 to a main sub-structure 6, the lay-up 14 exhibits a first portion 21 extending essentially orthogonally from the bore holes flange portion F1 parallel with an imaginary line (normal) perpendicular to the plane of the bore holes flange portion F1. This first portion 21 of the lay-up 14 is adapted to co-cure with a stringer lay-up 12 of the integral lay-up 17 later on constituting the structure 3. A second portion 23 of the rib foot lay-up 14 also extends orthogonally from the bore holes flange portion F1, but herewith the extension direction is opposite the direction of extension regarding the first portion 21 and the plane is rotated about 90 degrees relatively the plane of the first portion 21. The second portion 23 of the lay-up 14 is adapted to co-cure with a skin lay-up 10 of the finished structure 3. Fig. 3b illustrates one example of a rib foot lay-up 14. With reference from a flange portion F1, the lay-up 14 exhibits a first portion 21 extending essentially orthogonally from the bore holes flange portion F1 parallel with an imaginary line (normal) perpendicular to the plane of the flange portion F1. This first portion 21 is adapted to co-cure with an upper flange of a I-profile stringer lay-up 12. A second portion 23 extends from the bore holes flange portion F1 parallel with the first portion 21 for attachment to an lower flange of the I-profile stringer lay-up 12. Fig. 3c illustrates one example of a rib foot lay-up 14. With reference from a flange portion F1 arranged for drilling of bore holes for bolting the structure 3 to a main sub-structure 6, the lay-up 14 exhibits a first portion 21 extending essentially orthogonally from the bore holes flange portion F1 parallel with an imaginary line (normal) perpendicular to the plane of the flange portion F1. This first portion 21 is adapted to co-cure with a web of a stringer lay-up 12. A second portion 23 extends in the same direction as the plane of first portion 21, but the plane of the second portion 23 is rotated with an angle of about 90 degrees relatively the plane of the first portion 21. I.e. the bore holes flange portion F1 (fastening portion), the first portion 21, the second portion 23 exhibit three walls of an imaginary box. The angle between the bore holes flange portion F1 plane and the first portion 21 plane corresponds with the angle between the main sub-structure 6 extension (e.g. wing rib) and stringer 11 extension. Fig. 3d illustrates one example of a rib foot lay-up 14. This rib foot lay-up 14 is adapted to extend between two adjacent stringer elements 11. For achieving resilience of the fastener element, the lay-up is formed with a waist. Fig. 3e illustrates one example of a rib foot lay-up 14 arrangement of a set of lay-ups of the type shown in Fig. 3c. Each stringer lay-up 12, for each rib foot position, being attached to four separate rib foot lay-ups 14. A first set 24' of two rib foot lay-ups 14 is mirrored and positioned face to face. A corresponding second set 24" of two fastener lay-ups 14 is mirrored to the first set 24' and arranged to an adjacent stringer lay-up 12. A gap 25 between the first 24' and second 24" set is provided for reaching resilience in the structure. The respective set 24', 24" attached on both sides of a stringer lay-up 12 will contact each other via the lay-up 12 and their respective first flanges 21. In such way is a rigid structure achieved.

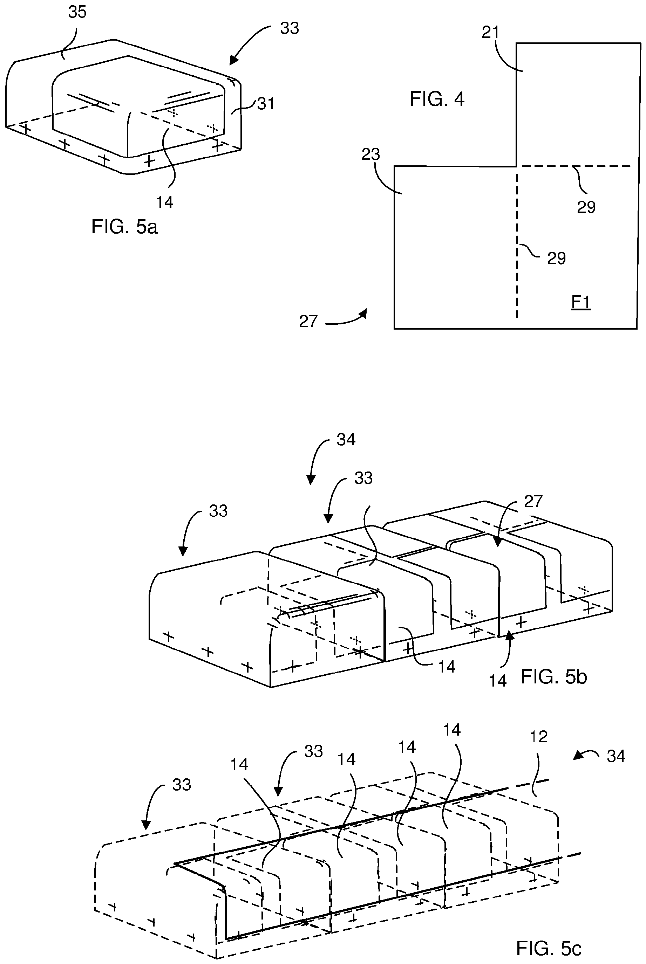

Fig. 4 illustrates a pre-preg lay-up used for a blank formed to a simular profile as shown in Fig. 3c. The pre-preg lay-up is cut into L-shaped flat blank 27. The blank 27 is conformed along the lines marked with dotted lines 29. A flange portion F1 designed for attachment to a rib foot (not shown) comprises said lines 29, which will constitute the edge areas of the flange portion F1. Each first 21 (surface to be attached to stringer lay-up) and second 23 portion (surface to be attached to skin lay-up) is formed (conformed or folded) with an angle about 90 degrees to the plane of the flange portion F1. Of course, such angle can be 70-80 degrees (or other) depending upon application.

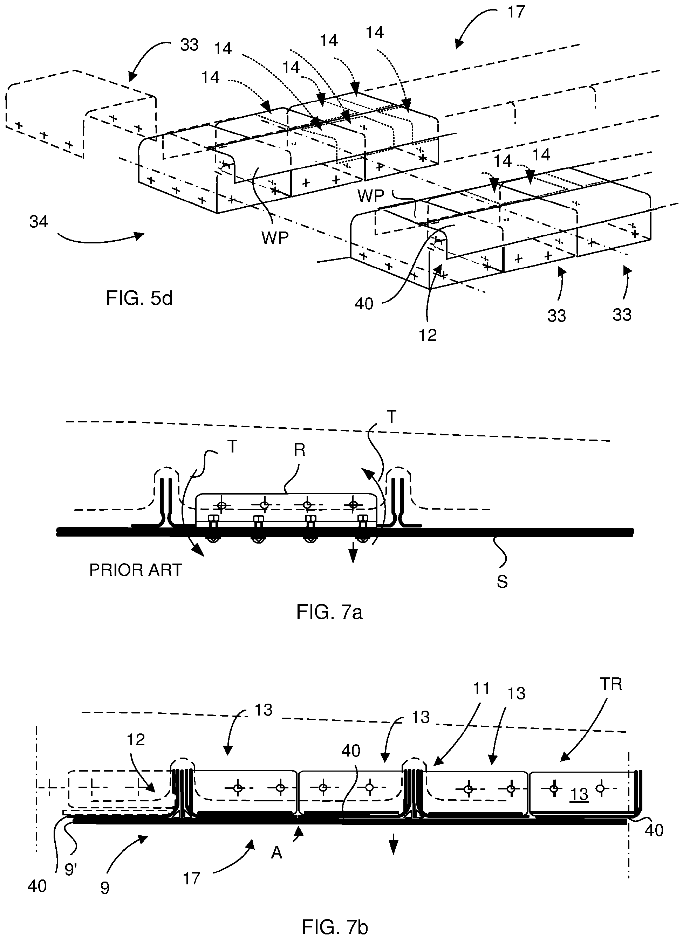

Fig. 5a illustrates a forming tool 31 accordning to one aspect of the present invention. Figs. 5b-5c illustrate a section of a modular system of box tools 33 accordning to one aspect of the present invention. Fig. 5d illustrates the section in Fig. 5c further coupled to additional sections of the modular system of box tools 33 for forming an integral lay-up 17. Figs. 5a to 5d thus illustrate a box tool 33 of a modular system (just shown in part) of box tools according to one aspect of the present invention. The box tool 33 shown in Fig. 5a comprises a forming surface 35 onto which a rib foot lay-up 14 having the cut configuration shown in Fig. 4 is applied. The rib foot lay-up comprises a plurality of pre-preg plies, each having a fiber orientation tailor made for each application. The box tool 33 is manufactured semi-automatically or automatically by means of an automatic miller machine coupled to a central control unit (not shown). The central control unit is in turn coupled to a designer (not shown) personal computer PC (not shown) adapted for the design of the torsion-box type skin composite structure 3. In Fig. 5b is shown a rib foot lay-up 14 laid in the shape of such box-like imaginary box rib foot lay-up having three walls as desribed in Fig 3c. Almost each corner of the box tools 33 are used for application of three wall box-like rib foot lay-ups 14. The blanks 27 are preferably conformed by means of hot drape forming. Thereafter, the box tools 33 are assembled and rigidly secured to each other constituting a part of a modular box tool 34. In Fig. 5c is shown the application of stringer lay-ups 12. Each stringer lay-up 12 being formed by two L profile lay-ups extending over the previous applied rib feet lay-ups 14. Essentially all cavities are filled with so called noodles cut from pre-preg tapes. In Fig. 5d is illustrated the securing and mounting (bolting not shown) of the box tools 33 into a rigid module box tool 34, wherein the L profile lay-ups will abut each other with web portions WP forming a stiffening rib of the stringer 11 when co-cured. The flanges 40 of the L profiles (i.e. co-cured flanges of the stringer lay-ups 12) will, due to their fully extension in the composite skin's plane, form an intergal part of the skin component 9. The definition of stringer flanges 40 may in this application therefore be also part of the skin component 9. The skin lay-up 10 will suitably after co-curing together with the stringer flanges 40 lay-up 12 constitute a part ot the skin component 9. Fig. 5d thus illustrates box tools 33 arranged in series, which in turn are secured to a parallely provided skin component 9 arranged set of box tools 33 in series. The respective set of box tools 33 is secured to each other and the flanges 40 of the L-profiles will abut each other forming a web having a T-shaped lay-up. Each T-shaped lay-up will form a stringer lay-up 12 having a web portion WP constituting (after co-curing) a stiffening web, which will also serves as an attachment (co-curing area) section for connection to the rib foot lay-up 14. Noodles (not shown) cut from pre-preg tape have been arranged in cavities formed by the radius of the lay-ups, 10, 12, 14, which noodles will serve as reinforcement fillers of the structure 3.

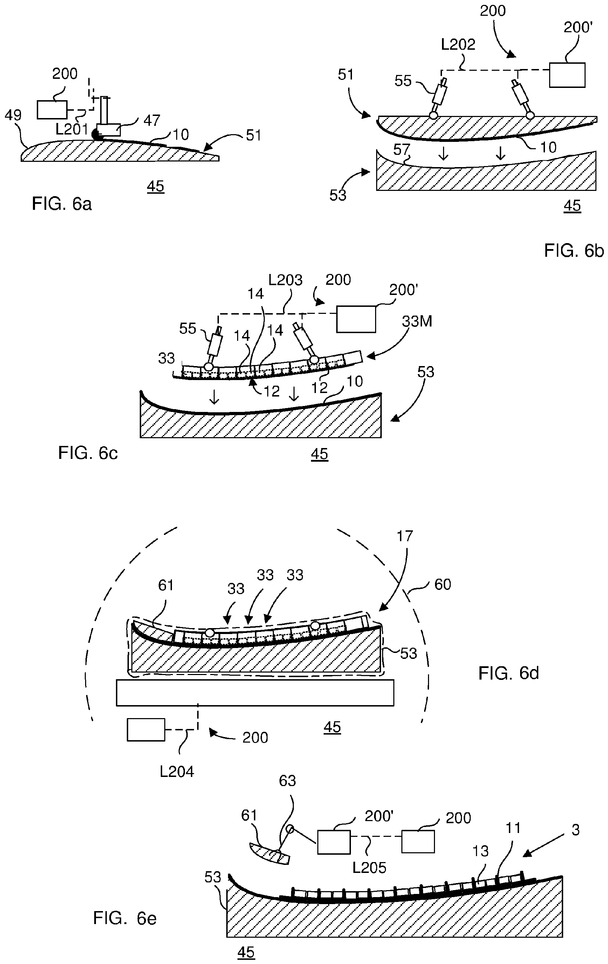

Fig. 6a to 6e illustrate method steps and manufacture tools of a production line 45 according to one aspect of the present invention. Fig. 6a illustrates an ATL (automatic tape laying) apparatus 47, which is semi-automatic or automatic operated for the application of a skin lay-up 10 onto a forming surface 49 of a male forming tool 51. The skin lay-up 10 comprises resin pre-impregnated fiber plies (not shown) not yet being fully cured. The plies are laid in different directions for achiving a proper strength of the finished laminate. A control processor unit 200 is provided to operate the ATL apparatus 47. Fig. 6b illustrates the application of the male tool 51 comprising the skin lay-up 10 (after being turned up-side down) in position over a female forming tool 53. A set of prolongated actuators 55 (such as hydrauls) are operated by a first control unit 200' to move the skin lay-up 10 into position onto a forming surface 57 of the female forming tool 53. Fig. 6c illustrates how the hydrauls 55 are operated to position an integrated stringer lay-up 12 and rib foot lay-up 14 onto the skin lay-up 10 inner side, thereby forming an integral lay-up 17 comprising stringer 12 and rib feet lay-ups 14 and skin lay-up 10. The first control unit 200' operates also this procedure. Prior the positioning of each stringer lay-up 12 over the rib foot lay-ups 14, the latter are applied with an adhesive for filling eventual gaps between the lay-ups. In Fig. 6d is illustrated an integral lay-up 17 ready for an automatic insertion into an autoclave 60 tool for co-curing. The integral lay-up 17 is assembled together with sub-spar tools 61, blade lay-ups (not shown) of pre-pregs inserted within stringer and rib feet lay-ups, noodles and other suitable components constituting an assembly. The assembly and female tool 53 have been bagged, wherein air suction is performed for sucking eventual air from the pre-preg ply interfaces, thus compacting the lay-ups and preparing the assembly for a proper co-curing. After the bagging procedure, the assembly is inserted into the autoclave 60. The autoclave 60 provides that the integral lay-up 17 co-cures in hot air temperature and under high over pressure. Thereafter, the female tool 53 is removed together with the co-cured laminate from the autoclave 60 for demoulding, wherein box tools 33 are removed from the co-cured laminate. Fig. 6e illustrates a demoulding procedure, wherein a robot arm 63 removes components and tools from the finished laminate. After curing, the torsion-box type skin composite structure is moved to a manufacture station in production line 45 where an automatic inspection is performed of the structure. Also gaps in between stringer 11 and rib feet 13 are filled with plastic in purpose to achieve strength. At the same manufacture station a machining is performed for trimming, drilling etc. of the composite laminate. Bore holes (not shown) are drilled by an automatic drilling machine (preferably orbital drilling) through the rib feet 13 in bore holes flanges.

Figs. 7a to 7b illustrate a part of the principle of the present invention, where Fig. 7a shows prior art principle. Fig. 7a illustrates prior art. The skins made of a thick aluminium sheet metal. Stringers made of composite have been attached to the skin S inner side. Rib feet R holding the skin S to the sub-structure are mounted. The rib feet R are riveted to the skin S. During use of the prior art skin S a tension occur forcing the skin S away within an area of an end portion of the rib foot R. This means that a torque T will act on the joint between the rib foot R and the skin S, wherein one end portion will be subject to tensile force and the other end portion will be subject to compression force. This phenomenon can occur for all type of skins, i.e. peel forces occurring on a composite skin and rib foot joint. Such torque is thus critical.

Fig. 7b illustrates one aspect of the invention. The skin 9 comprises a co-cured composite substrate skin ply 9'. Onto the substrate skin 9' lay-up are the flanges 40 of the stiffener lay-ups 12 applied. The flanges 40 extend to such extent that they abut A (or almost abut) each other at their edges, so that the substrate skin 9' lay-up fully is covered by said flanges 40. In such way the stringers will be an integrated part of the skin component 9, wherein the flanges 40 of the stringers 11 will increase the skin 9 component strength. Such integrated stringer flange 40 and skin substrate 9' will save weight, which is important for aircraft industry. This also implies less fuel consumption of an aircraft, which is environmental friendly. Fig. 7b illustrates the principle of arranging a train (chain) TR of rib feet 13 in a line extending over the skin 9 component inside surface in chord wise direction. Such train of rib feet, interlocked by also the web stringer material (thickness) seen chord wise (transverse to the longitudinal direction of the stringer elements 11), will promote a rigidity to the structure, but primary it will gain the strength of the structure 3 regarding peel forces and shear forces between rib feet 13 and skin 9.

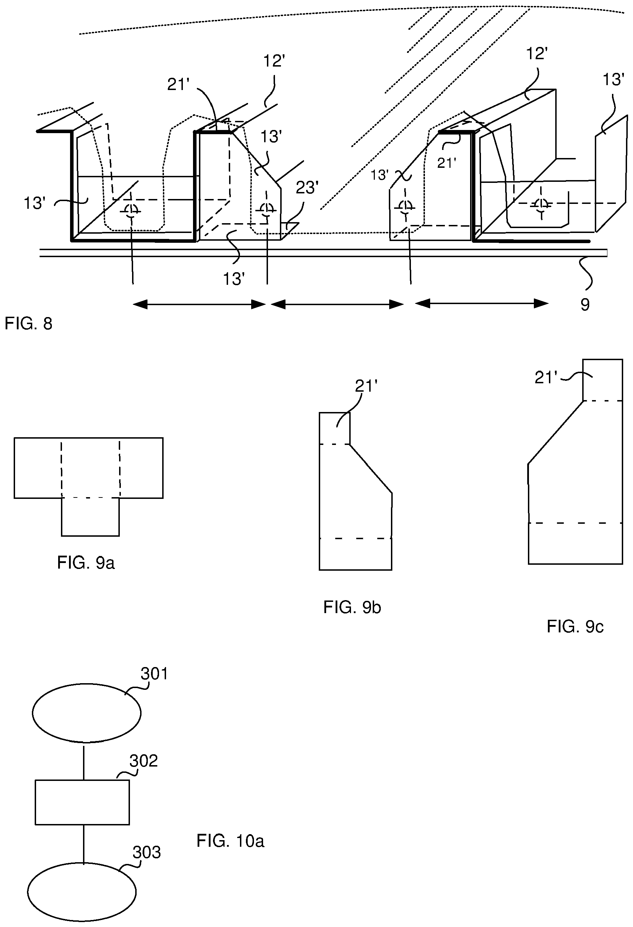

Fig. 8 illustrates one aspect of the present invention. Rib feet 13' are integrated with the skin 9 and stringers 12' by co-curing. Upper flanges 21' of the rib feet 13' are attached by means of the co-curing procedure to upper flanges 21' of the stringers 12' having a Z-profile. Also lower flanges 23' of the rib feet 13' are attached to the skin 9 during the same co-curing step.

Figs. 9a to 9c illustrate fiber mats cut into a suitable shape for the rib feet shown in Fig. 8. The mats are injected during one injection step with resin.

Fig. 10a illustrates a flow chart of the method for manufacture of a torsion-box type skin composite structure, according to one aspect o the invention. The method starts in a Step 301. In Step 302 is provided a method for manufacture of the composite structure, mountable on a main sub-structure. In Step 303 the method fulfilled. The step 302 thus comprises the steps of: providing a forming tool; providing a skin lay-up onto the forming tool; positioning a stringer lay-up and a rib foot lay-up to the skin lay-up for forming an integral lay-up; and co-curing the integral lay-up.

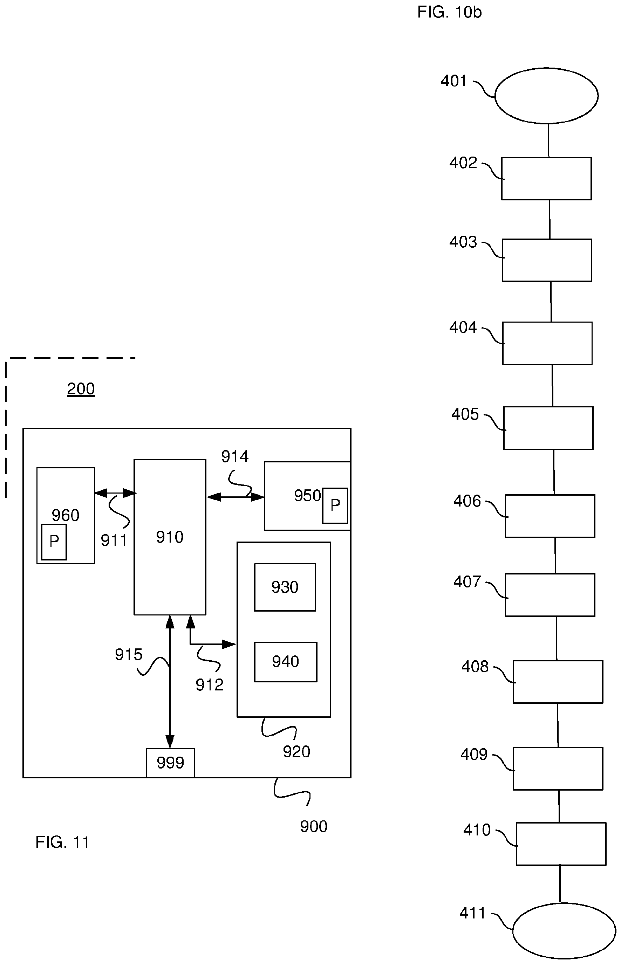

Fig. 10b illustrates a flow chart of the method for manufacture of a torsion-box type skin composite structure, according to one aspect o the invention. Step 401 corresponds to a starting (start-up) of a production line. Step 402 defines the providing a curved male and a corresponding female skin forming tool. Step 403 defines the application of a lay-up onto the male skin forming tool for forming an inner surface. Step 404 defines the application of the skin lay-up on the female skin forming tool for forming an outer surface of the skin lay-up by introducing male skin forming tool carrying skin lay-up into female skin forming tool. Step 405 defines the removal of the male skin forming tool from the skin lay-up applied to the female skin forming tool. Step 406 defines the introduction of a module box forming tool, on which a second lay-up has been pre-formed, into and in proper position relative the female skin forming tool in such way that the second lay-up contacts the skin lay-up. Step 407 defines the sealing of the female skin forming tool and introduced module box forming tool positioning the skin lay-up and the second lay-up within a vacuum bag for evacuation. Step 408 defines the bagging of the female skin forming tool and introduced module box forming tool comprising the lay-ups within a vacuum bag for evacuation. Step 409 defines a co-curing of the lay-ups in an autoclave. Step 410 defines a demoulding procedure wherein the box tools are removed from the co-cured laminate. Step 411 defines a stop in production line. Alternatively, the finished article can be transported to a work-shop for mounting the article to the main sub-structure of an aircraft wing, wherein the rib feet are bonded to the main sub-structure.

Fig. 11 illustrates a device 900 according to one aspect of the invention. The control unit 200 of the production line 45 described in Fig. 6a-6e may comprise the device 900. The device 900 comprises a non-volatile memory NVM 920 which is a computer memory that can retain stored information even when the computer is not powered. The device 900 further comprises a processing unit 910 and a read/write memory 950. The NVM 920 comprises a first memory unit 930. A computer program (which can be of any type suitable for any operational data base) is stored in the first memory unit 930 for controlling the functionality of the device 900 as a part of e.g. the production line shown in Figs. 6a to 6f.

Furthermore, the device 900 comprises a bus controller (not shown), a serial communication port (not shown) providing a physical interface through which information transfers separately in two directions. The device 900 also comprises any suitable type of I/O module (not shown) providing input/output signal transfer, an A/D converter (not shown) for converting continuously varying signals from detectors (not shown) and other monitoring units (not shown) of the production line into binary code suitable for the computer.

The device 900 also comprises an input/output unit (not shown) for adaption to time and date. The device 900 also comprises an event counter (not shown) for counting the number of event multiples that occur from independent events in the production line. Furthermore the device 900 includes interrupt units (not shown) associated with the computer for providing a multitasking performance and real time computing in said production line. The NVM 920 also includes a second memory unit 940 for external controlled operation.

A data medium storing program P comprising driver routines adapted for drivers (not shown) and provided for operating the device 900 for performing the present method described herein. The data medium storing program P comprises routines for causing in a production line an automatic or semi-automatic manufacture of a torsion-box type skin composite structure mountable to a main sub-structure. The data medium storing program P comprises a program code stored on a medium, which is readable on the computer, for causing the control unit 200 to perform the method steps of: providing a forming tool; providing a skin lay-up onto the forming tool; positioning a stringer lay-up and a rib foot lay-up to the skin lay-up for forming an integral lay-up; and co-curing the integral lay-up.

The data medium storing program P further may be stored in a separate memory 960 and/or in a read/write memory 950. The data medium storing program P is in this embodiment stored in executable or compressed data format.

It is to be understood that when the processing unit 910 is described to execute a specific function this involves that the processing unit 910 executes a certain part of the program stored in the separate memory 960 or a certain part of the program stored in the read/write memory 950.

The processing unit 910 is associated with a data port 999 for communication via a first data bus 915. The non-volatile memory NVM 920 is adapted for communication with the processing unit 910 via a second data bus 912. The separate memory 960 is adapted for communication with the processing unit 910 via a third data bus 911. The read/write memory 950 is adapted to communicate with the processing unit 910 via a fourth data bus 914. The data port 999 is preferably connectable to e.g. data links L201, L202, L203, L204 and L205 of the production line shown in Figs. 6a to 6f.

When data is received by the data port 999, the data will be stored temporary in the second memory unit 940. After that the received data is temporary stored, the processing unit 910 will be ready to execute the program code, according to the above-mentioned procedure. Preferably, the signals (received by the data port 999) comprise information about operational status of the production line, such as operational status regarding the ATL performance for producing the proper lay-up in correspondence with designer drawings. It could also be operational data regarding the positioning of the lay-ups relatively the forming tools and the monitoring of such positioning. According to one aspect, signals received by the data port 999 may contain information about curing temperature and over pressure of the autoclave. The received signals at the data port 999 can be used by the device 900 for controlling and monitoring a semi-automatic or automatic production line for manufacture of manufacture of the torsion-box type skin composite structure mountable to a main sub-structure in a cost-effective way. The signals received by the data port 999 can be used for automatically moving and positioning the box tools into position against the semi-cured skin lay-up for adherence to the different lay-ups in the production line by means of robot arms. The information is preferably measured by means of suitable sensor members arranged in each automatic apparatus of the production line. The information can also be manually fed to the control unit 200 via a suitable communication device, such as a personal computer display.

Parts of the methods can also be executed by the device 900 by means of the processing unit 910, which processing unit 910 runs the data medium storing program P being stored in the separate memory 960 or the read/write memory 950. When the device 900 runs the data medium storing program P, the method steps disclosed herein will be executed.

The present invention is of course not in any way restricted to the preferred embodiments described above, but many possibilities to modifications, or combinations of the described embodiments, thereof should be apparent to a person with ordinary skill in the art without departing from the basic idea of the invention as defined in the appended claims. The definition of lay-up may include the meaning of dry fiber mats injected with resin later on in a resin injection step or the meaning of with resin pre-impregnated fiber mats which is semi-cured or not cured at all. The definition of lay-up may include the meaning of only resin filled with nano fiber-like reinforcement elements or combinations with CFRP. The lay-up can be applied in different ways, having different fiber orientations in each ply, and may have a fiber mat which is infused with resin. The lay-ups may comprise a pre-preg tape such as unidirectional pre-impregnated fiber plies, fibers being of woven carbon fiber pre-preg fabrics or glass, Kevlar, spectra pre-preg tapes and fabrics etc. Thereby a laminate stack can be built by means of an ATL-apparatus, which is cost-effective. Examples of suitably composite materials include carbon fibers, aramid fibers, glass fibers, combinations of carbon and glass fibers or combinations of carbon, aramid and glass fibers. The skins and the substructure may be provided by laminating multiple sheets or layers having the fibers of respective sheet oriented in different directions. Each skin ply may comprise large fibers, such as carbon fibers, graphite fibers and/or carbon nano tubes oriented in different directions. For example, a ply with span wise oriented carbon fibers could be laid onto and adjacent a ply with chord wise oriented carbon fibers and upon this one a further ply having 45 degrees oriented fibers relative the span wise direction. Each ply can also comprise large fibers and/or carbon nano tubes or the like. The laminate materials may be achieved by resin transfer moulding (RTM) in an automated operation that combines compression, moulding, and transfer moulding processes. The mould may be loaded with layers of dry fibers and the resin being injected or drawn into the mould. Some of the elongated reinforcement fiber-like elements are oriented transverse to the laminate surface. Preferably, the resin is heated and pressure is applied. After curing, the structure is removed, suitably trimmed, ID-marked and stored. The integral fastener element is suitably defined as an integral attachment of the rib foot to both the stringer and the skin component (skin). The integral attachment to the skin component is preferably made via the flanges of the stringer which flanges in turn are attached (co-cured) to a skin substrate component. The thickness of said flanges and that of the skin substrate component defines the skin component overall thickness. The definition of stringer flanges may in this application therefore be also part of the skin component. The skin lay-up will suitably after co-curing together with the stiffener flanges lay-up constitute a part ot the composite skin. Of course, a first surface of the rib foot lay-up to be attached to stringer lay-up and a second surface of the rib foot lay-up to be attached to skin lay-up is preferably formed with an angle about 90 degrees to the plane of the flange portion of the rib foot lay-up. Of course the surfaces can be arranged so that, such angle can be 70-80 degrees (or other) depending upon application. Of course can the second surface be used for attachment to the rib foot and the flange portion co-cure with the skin lay-up. The definition of herein regarding the term "composite" means a plastic material being reinforced with fiber like material and the composite may comprise several plies with different fiber orientations.

## Claims

1. A method for manufacture of a torsion-box type skin composite structure (3) mountable to a main sub-structure (6), the torsion-box type skin composite structure (3) comprises a skin component (9), a stringer (11), a rib foot (13) for mounting the torsion-box type skin composite structure (3) to the main sub-structure (6), the method comprises the step of:
- providing a forming tool (31);
- providing a skin lay-up (10) onto the forming tool (31);
- positioning a stringer lay-up (12) and a rib foot lay-up (14) to the skin lay-up (10) for forming an integral lay-up (17); wherein a first surface of the rib foot lay-up is attached to the stringer lay-up and a second surface of the rib foot lay-up is attached to the skin lay-up; and
- co-curing the integral lay-up (17).

2. The method according to claim 1, wherein the step of positioning the stringer (12) and the rib foot lay-up (14) is performed after forming said stringer (12) and rib foot lay-ups (14) over a box tool (33, 34).

3. The method according to claim 1 or 2, wherein the step of positioning the stringer (12) and the rib foot lay-up (14) is performed such that a first portion (21) of the rib foot lay-up (14) joins the stringer lay-up (12).

4. The method according to any of claims 1 to 3, wherein the step of positioning the stringer (12) and the rib foot lay-up (14) is performed such that a second portion (23) of the rib foot lay-up (14) joins the skin lay-up (10).

5. The method according to any of the preceding claims, wherein the step of positioning the stringer (12) and rib foot lay-up (14) to the skin lay-up (10) is made after the application of an adhesive to a joining area between said lay-ups (10, 12, 14).

6. The method according to claim 5, wherein said adhesive comprises fiber-like reinforcement elements.

7. The method according to any of the preceding claims, wherein the step of co-curing the integral lay-up (17) is made in an autoclave (60).

8. A torsion-box type skin composite structure mountable to a main sub-structure (6), the torsion-box type skin composite structure (3) comprises a skin component (9), a stringer (11), a rib foot (13) for mounting the torsion-box type skin composite structure (3) to the main sub-structure (6), **characterized by** that the rib foot (13) exhibits a first portion (21), which is firmly integrated with the stringer (11), wherein a first surface of a rib foot lay-up is attached to the a stringer lay-up and a second surface of the rib foot lay-up is attached to a skin lay-up.

9. The structure according to claim 8, **wherein** the stringer (11) exhibits a second portion (23), which is firmly integrated with the skin component (9).

10. The structure according to claim 8 or 9, **wherein** the rib foot (13) exhibits a third portion (F1), which comprises at least one bore hole (15).

11. The structure according to any of claims 8 to 10, **wherein** the rib foot (13) is configured as a three-wall laminate co-cured with the stringer (11) and the skin component (9).

12. An aircraft wing comprising a torsion-box type skin composite structure (3) according to any of the preceding claims 8-11, **wherein** the torsion-box skin composite structure (3) is releasable mounted to a main sub-structure (6) via the integral rib foot (13).

13. A production line for the manufacture of a torsion-box type skin composite structure (3) mountable to a main sub-structure (6), the torsion-box type skin composite structure (3) comprises a skin component (9), a stringer (11), a rib foot (13) for mounting the torsion-box type skin composite structure (3) to the main sub-structure (6), the production line comprises:
- a control unit (200, 200');
- an apparatus for providing a forming tool (33, 51, 53);
- an apparatus (47) for providing a skin lay-up (10) onto the forming tool (33, 51, 53);
- an apparatus (55) for positioning a stringer lay-up (12) and a rib foot lay-up (14) to the skin lay-up (10) for forming an integral lay-up (17); wherein the control unit (200, 200') causes the production line to attach a first surface of the rib foot lay-up to the stringer lay-up and a second surface of the rib foot lay-up to the skin lay-up; and
- an apparatus (60) for co-curing the integral lay-up.

14. A data medium storing a program (P) for causing in a production line (45) according to claim 13 an automatic or semi-automatic manufacture of a torsion-box type skin composite structure (3), wherein said program (P) comprises a program code stored on the medium, which is readable on a computer, for causing a control unit (200, 200') to perform the method steps of:
- providing a forming tool (33, 51, 53);
- providing a skin lay-up (10) onto the forming tool (51, 53);
- positioning a stringer lay-up (12) and a rib foot lay-up (14) to the skin lay-up (10) for forming an integral lay-up (17); wherein a first surface of the rib foot lay-up is attached to the stringer lay-up and a second surface of the rib foot lay-up is attached to the skin lay-up; and
- co-curing the integral lay-up (17).

## Patentansprüche

1. Verfahren zur Herstellung einer torsionskastenartigen Hautverbundstruktur (3), die an einer Hauptunterstruktur (6) montierbar ist, wobei die torsionskastenartige Hautverbundstruktur (3) eine Hautkomponente (9), einen Stringer (11), einen Rippenfuß (13) zum Montieren der torsionskastenartigen Hautverbundstruktur (3) an der Hauptunterstruktur (6) umfasst, welches Verfahren die Schritte umfasst:
- Bereitstellen eines Formwerkzeugs (31);
- Bereitstellen einer Hautauflage (10) auf dem Formwerkzeug (31);
- Anbringen einer Stringerauflage (12) und einer Rippenfußauflage (14) an der Hautauflage (10) zum Formen einer integralen Auflage (17); wobei eine erste Oberfläche der Rippenfußauflage an der Stringerauflage befestigt ist, und eine zweite Oberfläche der Rippenfußauflage an der Hautauflage befestigt ist; und
- Co-Härten der integralen Auflage (17).

2. Verfahren nach Anspruch 1, wobei der Schritt des Anbringens der Stringerauflage (12) und der Rippenfußauflage (14) nach dem Formen der Stringerauflage (12) und der Rippenfußauflage (14) mittels eines Kastenwerkzeugs (33, 34) durchgeführt wird.

3. Verfahren nach Anspruch 1 oder 2, wobei der Schritt des Anbringens der Stringerauflage (12) und der Rippenfußauflage (14) derart durchgeführt wird, dass ein erster Teil (21) der Rippenfußauflage (14) mit der Stringerauflage (12) verbunden wird.

4. Verfahren nach einem der Ansprüche 1 bis 3, wobei der Schritt des Anbringens der Stringerauflage (12) und der Rippenfußauflage (14) derart durchgeführt wird, dass ein zweiter Teil (23) der Rippenfußauflage (14) mit der Hautauflage (10) verbunden wird.

5. Verfahren nach einem der vorhergehenden Ansprüche, wobei der Schritt des Anbringens der Stringerauflage (12) und Rippenfußauflage (14) an der Hautauflage (10) nach dem Aufbringen eines Klebstoffs auf ein Verbindungsbereich zwischen den Auflagen (10, 12, 14) erfolgt.

6. Verfahren nach Anspruch 5, wobei der Klebstoff faserartige Verstärkungselemente umfasst.

7. Verfahren nach einem der vorhergehenden Ansprüche, wobei der Schritt des Co-Härtens der integralen Auflage (17) in einem Autoklav (60) erfolgt.

8. Torsionskastenartige Hautverbundstruktur, die an einer Hauptunterstruktur (6) montierbar ist, wobei die torsionskastenartige Hautverbundstruktur (3) eine Hautkomponente (9), einen Stringer (11), einen Rippenfuß (13) zum Montieren der torsionskastenartigen Hautverbundstruktur (3) an der Hauptunterstruktur (6) umfasst, **dadurch gekennzeichnet, dass** der Rippenfuß (13) einen mit dem Stringer (11) fest integrierten ersten Teil (21) aufweist, wobei eine erste Oberfläche einer Rippenfußauflage an einer Stringerauflage befestigt ist, und eine zweite Oberfläche der Rippenfußauflage an einer Hautauflage befestigt ist.

9. Struktur nach Anspruch 8, wobei der Stringer (11) einen mit der Hautkomponente (9) fest integrierten zweiten Teil (23) aufweist.

10. Struktur nach Anspruch 8 oder 9, wobei der Rippenfuß (13) einen, zumindest ein Bohrloch (15) umfassenden, dritten Teil (F1) aufweist.

11. Struktur nach einem der Ansprüche 8 bis 10, wobei der Rippenfuß (13) als ein dreiwandiges Laminat ausgestaltet ist, das mit dem Stringer (11) und der Hautkomponente (9) co-gehärtet ist.

12. Flugzeugflügel, der eine torsionskastenartige Hautverbundstruktur (3) nach einem der vorhergehenden Ansprüche 8 bis 11 umfasst, wobei die torsionskastenartige Hautverbundstruktur (3) über den integralen Rippenfuß (13) an einer Hauptunterstruktur (6) lösbar montiert ist.

13. Produktionslinie zur Herstellung einer an einer Hauptunterstruktur (6) montierbaren torsionskastenartigen Hautverbundstruktur (3), wobei die torsionskastenartige Hautverbundstruktur (3) eine Hautkomponente (9), einen Stringer (11), einen Rippenfuß (13) zum Montieren der torsionskastenartigen Hautverbundstruktur (3) an der Hauptunterstruktur (6) umfasst, welche Produktionslinie umfasst:
- eine Steuereinheit (200, 200')
- eine Vorrichtung zum Bereitstellen eines Formwerkzeugs (33, 51, 53);
- eine Vorrichtung (47) zum Bereitstellen einer Hautauflage (10) auf dem Formwerkzeug (33, 51, 53);
- eine Vorrichtung (55) zum Anbringen einer Stringerauflage (12) und einer Rippenfußauflage (14) an der Hautauflage (10) zum Formen einer integralen Auflage (17); wobei die Steuereinheit (200, 200') die Produktionslinie dazu veranlasst, eine erste Oberfläche der Rippenfußauflage an der Stringerauflage und eine zweite Oberfläche der Rippenfußauflage an der Hautauflage zu befestigen; und
- eine Vorrichtung (60) zum Co-Härten der integralen Auflage.

14. Datenmedium, das ein Programm (P) speichert, zum Bewirken einer automatischen oder halbautomatischen Herstellung einer torsionskastenartigen Hautverbundstruktur (3) in einer Produktionslinie (45) nach Anspruch 13, wobei das Programm (P) einen Programmcode umfasst, der auf dem auf einem Computer lesbaren Medium gespeichert ist, um die Steuereinheit (200, 200') zum Durchführen der Verfahrensschritte zu veranlassen:
- Bereitstellen eines Formwerkzeugs (33, 51, 53);
- Bereitstellen einer Hautauflage (10) auf dem Formwerkzeug (51, 53);
- Anbringen einer Stringerauflage (12) und einer Rippenfußauflage (14) an der Hautauflage (10) zum Formen einer integralen Auflage (17); wobei eine erste Oberfläche der Rippenfußauflage an der Stringerauflage befestigt ist, und eine zweite Oberfläche der Rippenfußauflage an der Hautauflage befestigt ist; und
- Co-Härten der integralen Auflage (17).

## Revendications

1. Procédé de fabrication d'une structure composite de peau du type à boîte de torsion (3) pouvant être montée à une sous-structure principale (6), la structure composite de peau du type à boîte de torsion (3) comprenant un composant de peau (9), un montant (11), un pied de nervure (13) destiné à monter la structure composite de peau du type à boîte de torsion (3) à la sous-structure principale (6), le procédé comprenant les étapes consistant à :
- fournir un outil de formage (31) ;
- fournir une couche de peau (10) sur l'outil de formage (31) ;
- positionner une couche de montant (12) et une couche de pied de nervure (14) à la couche de peau (10) pour former une couche intégrale (17) ; dans lequel une première surface de la couche de pied de nervure est attachée à la couche de montant, et une deuxième surface de la couche de pied de nervure est attachée à la couche de peau ; et
- co-durcir la couche intégrale (17).

2. Procédé selon la revendication 1, dans lequel l'étape consistant à positionner la couche de montant (12) et la couche de pied de nervure (14) est effectuée après la formation de ladite couche de montant (12) et de ladite couche de pied de nervure (14) au-dessus d'un outil de boîte (33, 34).

3. Procédé selon la revendication 1 ou 2, dans lequel l'étape consistant à positionner la couche de montant (12) et la couche de pied de nervure (14) est effectuée de sorte qu'une première partie (21) de la couche de pied de nervure (14) se raccorde à la coche de montant (12).

4. Procédé selon l'une quelconque des revendications 1 à 3, dans lequel l'étape consistant à positionner la couche de montant (12) et la couche de pied de nervure (14) est effectuée de sorte qu'une deuxième partie (23) de la couche de pied de nervure (14) se raccorde à la couche de peau (10).

5. Procédé selon l'une quelconque des revendications précédentes, dans lequel l'étape consistant à positionner la couche de montant (12) et la couche de pied de nervure (14) à la couche de peau (10) est réalisée après l'application d'un adhésif sur une zone de jonction entre lesdites couches (10, 12, 14).

6. Procédé selon la revendication 5, dans lequel ledit adhésif comprend des éléments de renforcement analogues à des fibres.

7. Procédé selon l'une quelconque des revendications précédentes, dans lequel l'étape de co-durcissement de la couche intégrale (17) est réalisée dans un autoclave (60).

8. Structure composite de peau du type à boîte de torsion pouvant être montée à une sous-structure principale (6), la structure composite de peau du type à boîte de torsion (3) comprenant un composant de peau (9), un montant (11), un pied de nervure (13) destiné à monter la structure composite de peau du type à boîte de torsion (3) à la sous-structure principale (6), **caractérisée en ce que** le pied de nervure (13) présente une première partie (21) qui est fermement intégrée au montant (11), dans laquelle une première surface d'une couche de pied de nervure est attachée à la couche de montant, et une deuxième surface de la couche de pied de nervure est attachée à une couche de peau.

9. Structure selon la revendication 8, **dans laquelle** le montant (11) présente une deuxième partie (23) qui est fermement intégrée au composant de peau (9).

10. Structure selon la revendication 8 ou 9, **dans laquelle** le pied de nervure (13) présente une troisième partie (F1) qui comprend au moins un trou de forage (15).

11. Structure selon l'une quelconque des revendications 8 à 10, **dans laquelle** le pied de nervure (13) est configuré en tant que stratifié à trois parois et co-durci avec le montant (11) et le composant de peau (9).

12. Aile d'avion comprenant une structure composite de peau du type à boîte de torsion (3) selon l'une quelconque des revendications précédentes 8 à 11, **dans laquelle** la structure composite à peau de boîte de torsion (3) est montée de manière amovible à une sous-structure principale (6) par l'intermédiaire du pied de nervure intégré (13).

13. Ligne de production pour la fabrication d'une structure composite de peau du type à boîte de torsion (3) pouvant être montée à une sous-structure principale (6), la structure composite de peau du type à boîte de torsion (3) comprenant un composant de peau (9), un montant (11), un pied de nervure (13) destiné à monter la structure composite de peau du type à boîte de torsion (3) à la sous-structure principale (6), la ligne de production comprenant :
- une unité de commande (200, 200'),
- un dispositif destiné à fournir un outil de formage (33, 51, 53) ;
- un dispositif (47) destiné à fournir une couche de peau (10) sur l'outil de formage (33, 51, 53) ;
- un dispositif (55) destiné à positionner une couche de montant (12) et une couche de pied de nervure (14) sur la couche de peau (10) pour former une couche intégrale (17) ; dans laquelle l'unité de commande (200, 200') amène la ligne de production à attacher une première surface de la couche de pied de nervure à la couche de montant, et une deuxième surface de la couche de pied de nervure à la couche de peau ; et
- un dispositif (60) destiné à co-durcir la couche intégrale.

14. Support de données stockant un programme (P) destiné à causer, dans une ligne de production (45) selon la revendication 13, une fabrication automatique ou semi-automatique d'une structure composite de peau du type à boîte de torsion (3), dans lequel ledit programme (P) comprend un code de programme stocké sur le support, qui est lisible sur un ordinateur, pour amener une unité de commande (200, 200') à exécuter les étapes du procédé consistant à :
- fournir un outil de formage (33, 51, 53) ;
- fournir une couche de peau (10) sur l'outil de formage (51, 53) ;
- positionner une couche de montant (12) et une couche de pied de nervure (14) à la couche de peau (10) pour former une couche intégrale (17) ; dans lequel une première surface de la couche de pied de nervure est attachée à la couche de montant, et une deuxième surface de la couche de pied de nervure est attachée à la couche de peau ; et
- co-durcir la couche intégrale (17).
